# FASCICULE DE BREVET EUROPEEN

(11) **EP 3 371 278 B1**
(45) Date de publication et mention de la délivrance du brevet: **08.01.2020**
(21) Numéro de dépôt: 16809478.7
(22) Date de dépôt: 03.11.2016
(51) Int. Cl.: C10K 1/02, B01D 45/08

(54) **DISPOSITIF D'ÉPURATION LAMELLAIRE SUR CENDRES FONDUES**
VORRICHTUNG ZUR LAMELLENKLÄRUNG AUF GESCHMOLZENER ASCHE
DEVICE FOR LAMELLA CLARIFICATION ON MOLTEN ASH

(30) Priorité: 04.11.2015 FR 1560553
(43) Date de publication de la demande: 12.09.2018
(73) Titulaire: Haffner Energy, 51300 Vitry Le Francois (FR)
(72) Inventeur: FERNANDEZ DE GRADO, Alain, 51300 Les Rivieres Henruel (FR); HAFFNER, Philippe, 51300 Vitry Le Francois (FR)
(74) Mandataire: Oudin, Stéphane
(86) Numéro de dépôt international: PCT/FR2016/052850
(87) Numéro de publication internationale: WO 2017/077242

(56) Documents cités:
- FR-A- 869 578
- FR-A- 896 173
- FR-A- 974 175
- US-A1- 2014 033 917

## Description

### Domaine de l'invention

La présente invention appartient au domaine de la production d'énergie par gazéification ou combustion de matière organique, soit de la biomasse, végétale ou animale, soit des hydrocarbures fossiles.

L'invention concerne particulièrement un dispositif d'épuration des gaz générés par un procédé de production d'énergie, c'est-à-dire des gaz synthétiques dans le cas de la pyrolyse et gazéification ou des fumées dans le cas de la combustion. Ces gaz entrainent des éléments indésirables qu'il s'agit de séparer du flux de gaz.

L'invention concerne également le procédé d'épuration de gaz utilisant ledit dispositif.

### Etat de la technique

Selon l'état de l'art actuel des technologies d'épuration des gaz produits par un procédé de gazéification ou de combustion, il est principalement fait usage des technologies suivantes:
- Le cyclonage par le biais de multi-cyclones permet une épuration par centrifugation des éléments indésirables solides plus lourds que les gaz, grâce à une injection tangentielle des gaz dans la tête du cyclone. La rotation à grande vitesse appliquée centrifuge les cendres et les entraine en bas du cyclone où elles sont récoltées sous l'appellation de cendres volantes.
- Le filtre à manches comporte des manches en matériau textile (par exemple en téflon ou PTFE) qui filtrent les gaz à traiter et retiennent en surface les particules solides en suspension dans les gaz. Un dispositif de contrecourant régulièrement actionné permet de nettoyer les manches et la poussière collectée tombe dans un réceptacle.

- Le filtre en céramique comporte des bougies rigides qui filtrent le gaz de la même façon que le filtre à manches. Toutefois, la bougie est faite d'un matériau qui supporte de plus hautes températures que les manches, avec un maximum de 500°C environ.
- L'électrofiltre applique un champ électrique entre deux plaques entre lesquelles circulent les gaz à traiter. Les particules solides en suspension sont ionisées et migrent sous l'effet des forces électromotrices créées par le champ électrique et sont ainsi séparées du flux de gaz.
- Enfin le lavage des gaz par douchage avec de l'eau, éventuellement mélangée avec des additifs chimiques facilitant la captation des éléments indésirables, permet de capter les particules en suspension et de les séparer du flux de gaz grâce à la chute des gouttes d'eau. Les cendres collectées sortent alors sous la forme d'un effluent liquide à traiter.

On connaît la demande de brevet US2014/0033917A1 qui décrit un système pour collecter des particules chaudes présentes dans un flux. La méthode en question consiste à faire dévier le flux par une chicane entre l'entrée et la sortie du flux. Cette chicane va permettre de faire rentrer en contact les particules chaudes avec les tôles, formant la chicane, de telle sorte à faire sortir lesdites particules du flux principal de gaz. De plus, ce document décrit un refroidissement combiné du flux de gaz à traiter. Ce refroidissement et cette chicane permettent de diminuer la capacité du flux à entrainer les particules qui tombent au fond du système où elles sont collectées.

Ces solutions traditionnelles présentent notamment les défauts suivants:
- Les technologies disponibles ont une fonction de dépoussiérage des gaz à une température maximale proche de 500°C. Or, lors de la gazéification ou de la combustion, les gaz créés peuvent avoir une température de plus de 1000°C, donc il faut d'abord refroidir les gaz avant de songer à les épurer. Sans cette étape coûteuse de refroidissement, les équipements de filtration ne pourraient pas fonctionner durablement.
- Durant ce refroidissement, la température des gaz va traverser la limite de fusibilité de certaines cendres ce qui provoque des dépôts sur les parois et l'encrassement des installations.
- Les cendres volantes récoltées sont pulvérulentes et très peu denses donc elles occupent un volume important. De plus elles restent chaudes très longtemps et elles peuvent réagir de façon exothermique si de l'eau est déversée accidentellement dessus, ou bien s'enflammer en présence d'oxygène. Ces cendres sont donc une source de contraintes importantes pour l'exploitant de l'installation.
- Enfin, lesdites cendres traversent préalablement et généralement plusieurs échangeurs de chaleur, dont le dimensionnement devra attentivement prendre en considération les risques d'encrassement, mais aussi les risques d'abrasion et de corrosion. Ceci induit des risques de surdimensionnement des échangeurs ou de performance d'échange thermique (pincements thermiques élevés, dépassant souvent 100°C) amoindrie ou encore d'encrassements réguliers et coûteux.

### Description de l'invention

La présente invention a pour but de pallier les inconvénients de l'état de la technique en proposant un dispositif d'épuration des gaz issus de la gazéification ou de la combustion, permettant d'obtenir une très bonne efficacité d'épuration et de disposer de cendres facilement manipulables.

Ainsi la présente invention concerne un dispositif d'épuration de gaz issus de la gazéification ou de la combustion de matière organique selon la revendication 1.

Dans le cadre de la présente invention, le terme « sensiblement parallèles » entend signifier que l'angle formé entre les deux surfaces est compris entre -20° et +20°, de préférence elles sont parallèles (i.e. angle de 0°).

Dans le cadre de la présente invention, le terme « connecté » entend signifier qu'il existe un passage entre ladite alimentation en gaz chaud et l'entrée des gaz de ladite veine d'une part et entre ladite évacuation des gaz épurés et la sortie de gaz de ladite veine d'autre part. Avantageusement, ledit passage entre ladite alimentation en gaz chaud et l'entrée des gaz de ladite veine est ouvert en un point bas afin de permettre l'évacuation des éléments indésirables.

Selon un mode de réalisation préféré de l'invention, ladite alimentation en gaz chauds contaminés est positionnée à une altitude inférieure à celle de ladite évacuation des gaz épurés.

Selon un mode de réalisation préféré de l'invention, ledit moyen de régulation de la température de ladite enceinte est apte à réguler la température à l'intérieur de ladite enceinte au delà de 600°C et tout à fait préférentiellement au-delà de 700°C.

Ledit moyen de régulation de la température peut être avantageusement disposé de sorte à réguler la température de tout ou partie des parois de ladite enceinte.

Par ailleurs, ledit moyen de régulation de la température de ladite enceinte peut avantageusement être un moyen de chauffage du flux principal de gaz disposé en amont de l'alimentation en gaz chauds contaminés.

Selon un mode de réalisation préféré de l'invention, la veine est encadrée par au moins deux plaques planes sensiblement parallèles.

Selon un mode de réalisation préféré de l'invention, les surfaces encadrant ladite veine présentent des ondulations dans le sens transversal. Ainsi, les surfaces encadrant la veine présente des canaux d'écoulement dans le sens de l'inclinaison.

Dans le cadre de la présente invention, le terme « transversal » entend désigner la direction perpendiculaire à la direction de l'inclinaison de la veine.

Selon un mode de réalisation préféré de l'invention, ledit dispositif comprend en outre un générateur de champ électrique disposé de telle sorte à générer un champ électrique à l'intérieur de ladite veine.

Selon un mode de réalisation préféré de l'invention, ledit dispositif comprend en outre un générateur de champ magnétique disposé de telle sorte à générer un champ magnétique à l'intérieur de ladite veine.

Selon un mode de réalisation préféré de l'invention, ledit dispositif comprend en outre un moyen apte à chauffer au moins une des surfaces encadrant ladite veine.

Selon un mode de réalisation préféré de l'invention, ledit dispositif comprend en outre un dispositif de chauffe apte à chauffer la surface interne inférieure de ladite enceinte.

Selon un mode de réalisation préféré de l'invention, ledit dispositif comprend en outre un dispositif de chauffe apte à chauffer ladite sortie basse des éléments indésirables.

Selon un mode de réalisation préféré de l'invention, ledit dispositif d'épuration comprend plusieurs veines et selon un mode de réalisation tout à fait préféré lesdites veines sont superposées.

La présente invention concerne également un procédé d'épuration de gaz issus de la gazéification ou de la combustion de matière première organique, mettant en œuvre un dispositif selon l'invention.

Selon un mode de réalisation préféré de l'invention, les gaz chauds contaminés à traiter ont une température à l'introduction dans l'enceinte supérieure ou égale à la température de fusion des éléments indésirables qui doivent être capturés.

### Avantages de l'invention

L'épuration peut s'effectuer à une température supérieure à la température de fusion d'une proportion choisie des particules à éliminer, de manière à produire un mélange de cendre liquides.

Lesdites cendres, éléments indésirables, sont soit transportées par les gaz chauds sous forme de gouttelettes liquides de petite taille (le diamètre est généralement inférieur à un millimètre, bien qu'un phénomène de floculation puisse provoquer des amalgames de plus grandes dimensions) qui ont une vitesse de sédimentation spécifique sous l'effet de la gravité, soit mises en fusion au contact des parois de la veine, lesdites parois devant alors être chauffées.

L'avantage de l'invention est d'abord que les gaz sont épurés sans refroidissement préalable ce qui améliore le rendement énergétique de l'installation.

De plus, la forme liquide des éléments indésirables permet d'améliorer l'efficacité de l'installation proposée par l'invention. Enfin, les éléments indésirables séparés sont avantageusement évacués sous forme liquide puis refroidis et vitrifiés. Les rejets sont alors très faciles à stocker et manipuler et peuvent être définis comme inertes sous forme de vitrifiat solide. De plus, le refroidissement permet de disposer d'une énergie thermique à haute température donc récupérable et valorisable ailleurs dans le procédé.

D'autres caractéristiques et avantages de l'invention ressortiront de la description détaillée suivante des modes de réalisation non limitatifs de l'invention, en référence aux figures annexées, dans lesquelles :
- la figure 1 présente la coupe longitudinale d'un mode de réalisation du dispositif d'épuration selon l'invention dans le sens d'écoulement des gaz.

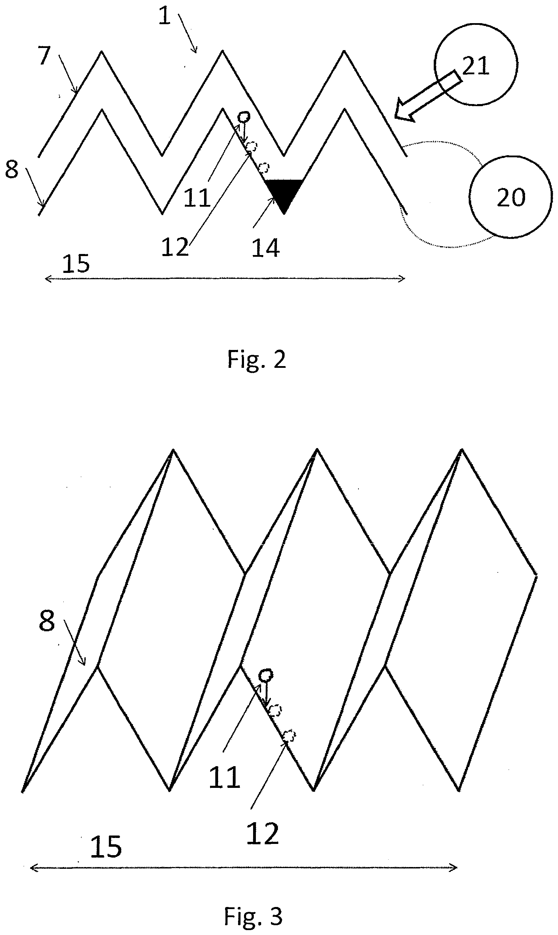

- la figure 2 présente la coupe transversale d'un mode de réalisation du dispositif d'épuration avec veine selon l'invention montrant des ondulations favorisant la collecte des éléments indésirables
- la figure 3 présente une vue en perspective d'un mode de réalisation du dispositif d'épuration avec veine selon l'invention.

### Exposé d'un mode de réalisation

La présente invention concerne un dispositif d'épuration 1 de gaz générés par un procédé de production d'énergie de façon à séparer des gaz les particules en suspension entraînées. Ce dispositif suppose que les gaz traités ont une température supérieure à la température de fusion des particules que l'on souhaite éliminer. Dans le cadre de la présente invention, le terme « éléments indésirables » entend désigner les particules que l'on souhaite séparer des gaz.

Les éléments indésirables concernés sont typiquement des cendres, c'est-à-dire des éléments minéraux ou métalliques contenus dans la matière initiale du procédé en amont de la production d'énergie et qui n'ont pas pu être décomposés ou gazéifiés ou vaporisés par la température appliquée en amont, à la différence de la majorité des éléments organiques.

Notons que les éléments minéraux ou métalliques ayant une température de vaporisation inférieure à la température des gaz qui rentrent dans le dispositif d'épuration 1 sont présents sous forme de vapeur et n'ont pas obligatoirement vocation à être séparés des gaz par l'invention.

Il peut aussi s'agir d'éléments organiques imbrûlés, par la faute d'une opération antérieure incomplète de pyrolyse ou gazéification ou combustion, qu'il s'agit alors de séparer des gaz.

Selon la matière initiale utilisée par le procédé amont et les éléments indésirables que l'on souhaite éliminer, la température de fusion n'a pas une valeur universelle.

Par exemple, si la matière première est de la rafle de maïs, la température de fusion des cendres obtenues après combustion communément observée est d'environ 850°C. Si la matière première est de la plaquette forestière de feuillus européens, les cendres ont une limite de fusibilité généralement supérieure à 1400°C, c'est-à-dire qu'elles présentent un comportement d'écoulement pâteux voire liquide au-delà de cette limite.

Dans la suite de la description nous utiliserons le terme "température de fusion" d'un élément indésirable pour définir la température au-dessus de laquelle cet élément passe de l'état de solide à l'état de liquide et surtout adopte une capacité à couler le long d'une paroi inclinée.

L'invention peut fonctionner à une température à sélectionner en fonction de la matière initiale utilisée en amont, de façon à garantir un comportement d'écoulement sous l'effet de la gravité des particules collectées qu'il s'agit de séparer des gaz.

L'invention s'applique aussi de façon sélective sur les composés chimiques en fonction de leur température de fusion. Ainsi le silicium, dont la température de fusion est de 1410°C, sera traité en sélectionnant une température d'épuration supérieure à cette valeur, par exemple 1450°C. Mais s'il s'agit de Silice (SiO2), alors la température de fusion sera ajustée au-dessus de 1900°C.

Dans le cadre de l'invention il est avantageux de combiner deux phénomènes: le premier concerne la fusion de certains éléments indésirables à séparer des gaz, comme indiqué ci-dessus. Le deuxième concerne la capture d'éléments indésirables encore solides car ayant une température de fusion supérieure à la température appliquée dans le dispositif, mais qui sont capturées par contact avec des particules liquides ayant une température de fusion inférieure à la température appliquée. L'ensemble forme un agglomérat de particules solides et de particules liquides. L'épuration utilisant la captation et l'écoulement de particules fondues sera donc aussi efficace pour ces agglomérats de particules solides capturées par des particules liquides.

Ainsi, il est évident que le choix de la température de fonctionnement de l'épuration est très important et qu'il doit être fait en fonction de la nature des éléments indésirables ciblés.

Selon une variante de l'invention, il est avantageux de prévoir plusieurs étapes d'épuration des gaz à différentes températures, de façon à couvrir tout le spectre de fusion des éléments indésirables contenus dans les gaz à épurer. Ces étapes peuvent être assurées par l'utilisation successive de plusieurs dispositifs d'épuration selon l'invention en respectant une règle de température croissante. Ainsi on peut introduire les gaz dans un premier dispositif à une température basse afin d'enlever les éléments indésirables dont la température de fusion est juste inférieure à cette température basse. Ensuite les gaz sortant de cette première étape sont réchauffés et envoyés dans un deuxième dispositif similaire qui va épurer les élément indésirables dont la température de fusion est juste inférieure à cette nouvelle température plus haute, et ainsi de suite selon le nombre d'opérations et de niveaux de température que l'on souhaite appliquer.

Selon une autre variante de l'invention il est possible d'appliquer ces différentes opérations dans le même dispositif conçu en plusieurs étages, de façon à permettre le réchauffage des gaz entre chaque étage.

Dans le détail d'un mode de réalisation possible, le dispositif d'épuration 1 est composé d'une enceinte 2. Cette enceinte est alimentée en gaz à épurer par une connexion d'alimentation 3. Les gaz sont traités et ressortent par une connexion de sortie 4. Les éléments indésirables capturés sont évacués par gravité en partie basse par une sortie basse 5. Avantageusement, ladite sortie basse 5 est obturable afin d'empêcher la sortie de gaz à traiter pendant la réalisation du procédé tout en permettant l'évacuation intermittente des éléments indésirables. On peut notamment envisager l'utilisation d'un sas étanche équipé de deux vannes fonctionnant en alternance.

Dans cette enceinte, les gaz sont canalisés de façon à passer à l'intérieur d'une veine 6 depuis une entrée 9 et une sortie 10.

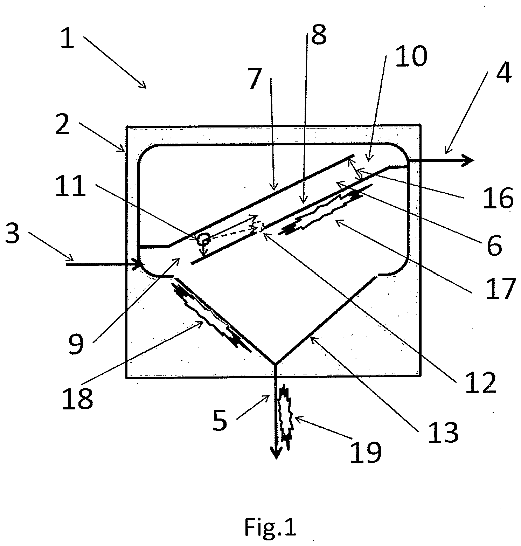

Selon une variante de l'invention, l'entrée 9 est placée à une altitude inférieure à la sortie 10 de façon à profiter de l'écoulement naturel de cendres liquides à cause de la gravité. Ainsi dans la disposition indiquée en figure 1, les gaz montent le long de la veine 6 et les particules captées descendent, selon une disposition dite à "contre-courant".

Selon une autre variante de l'invention, il est possible de faire circuler les gaz depuis une entrée haute vers une sortie basse, mais cela est moins favorable car alors les particules captives s'écoulent dans le même sens que les gaz, selon une disposition dite à "co-courant" qui peut altérer l'efficacité du dispositif.

De façon à garantir le traitement de tous les gaz, il est favorable d'obliger la totalité du débit des gaz à passer forcément dans une veine 6, soit qu'elle soit unique, soit qu'il y ait plusieurs veines disposées en parallèle. Le gaz qui by-passerait le dispositif ne serait pas épuré ce qui dégraderait l'efficacité globale du dispositif.

Le traitement d'épuration repose sur le phénomène de décantation d'une particule plus lourde que les gaz, entrainée dans une veine de gaz étroite 6. La particule fondue 11 est alors soumise à un déplacement selon un vecteur vitesse dans la direction de la veine, d'une valeur imposée par la vitesse d'écoulement des gaz ainsi qu'à une force verticale vers le bas due au poids de la particule concernée. Cette force verticale assure la migration de la particule 11 à travers l'épaisseur de la veine 6 jusqu'à ce qu'elle atteigne la surface inférieure 8. La particule 11 colle alors à la surface inférieure 8 et n'est plus entrainées par le gaz. Cette particule devient une particule captive 12.

Les particules captives 12 sont liquides et déposées sur une surface inclinée donc elles s'écoulent par gravité le long de la surface inférieure 8. Au cours du temps, comme les particules deviennent de plus en plus nombreuses, il peut arriver qu'elles entrent en contact et s'agglomèrent en plus grosses particules qui ont une vitesse d'écoulement plus grande. Ces agglomérats ainsi que toutes les particules individuelles non agglomérées déposées sur la surface inférieure 8 tombent finalement au niveau de la surface inférieure 13 de l'enceinte 2.

La veine est obtenue par le placement en vis-à-vis de deux surfaces dont l'une est placée au-dessus de l'autre. On a ainsi une surface supérieure 7 et une surface inférieure 8 qui sont inclinées par rapport à l'horizontale d'un angle compris entre une limite basse de 1° et une limite haute de 89°.

Avec une inclinaison de 0°, soit une disposition parfaitement horizontale des veines 6, l'écoulement par gravité serait lent. Avec une inclinaison de 90°, soit une disposition parfaitement verticale des veines 6, la migration par gravité des particules 11 ne leur permet pas de sortir de l'écoulement gazeux pour entrer en contact avec une des surfaces 7 ou 8. C'est pourquoi il est nécessaire de prévoir une inclinaison comprise entre 1° et 89°.

Selon l'invention, il est plus avantageux d'assurer un compromis entre l'écoulement par gravité (idéalement une veine 6 verticale) et la sortie la plus rapide de l'écoulement gazeux sous l'effet de la gravité (idéalement une veine 6 horizontale). Ce compromis est défini par une inclinaison comprise entre 30° et 60°.

Les surfaces 7 et 8 peuvent être de simples tôles planes disposées parallèlement, faites d'un matériau notamment résistant aux fortes températures, de l'ordre de 800 à 1800 °C, et qui n'est pas sujet aux déformations. Par exemple ce matériau peut être en alliage de molybdène, mais tout autre matériau répondant à ces critères pourrait convenir.

Selon une variante de l'invention, il est possible de remplacer les tôles par des éléments massifs de type béton réfractaire ou matériau en céramique, par exemple à base d'alumine (Al3O2) afin de résister à très fortes températures. Il faut toutefois que ces éléments massifs disposent de veines 6 comme défini ci-avant.

Selon une amélioration de l'invention, il est avantageux de disposer de surfaces présentant des plis ou des ondulations dans le sens transversal. Ainsi les ondulations ménagent des canaux de collecte 14 favorisant le rassemblement des particules captives 12 qui s'accumulent dans ces creux de façon à former un agglomérat liquide qui présente une vitesse d'écoulement plus grande jusqu'à leur évacuation vers le collecteur 13.

De plus, ces ondulations augmentent la probabilité de contact d'une particule sur une des surfaces 7 ou 8 par le fait que, pour une même largeur transversale de veine 15, la surface développée sera supérieure si les surfaces 7 et 8 sont ondulées plutôt que planes. Ainsi la probabilité qu'une particule entraînée par le flux de gaz rencontre une surface 7 ou 8 sera augmentée.

Par exemple, si les ondulations ont la forme de triangles équilatéraux, donc avec un angle au sommet de 60°, et que la veine présente une largeur transversale de un mètre, alors la longueur développée de la surface inférieure 7 sera mathématiquement de deux mètre. La longueur développée est alors double par rapport à la version de plaques planes sans ondulations.

Toujours selon l'invention, la distance 16 entre les deux surfaces de la veine 6 est préférentiellement inférieure à la valeur nécessaire pour que le temps de séjour du gaz dans la veine suffise à garantir la migration jusqu'à la surface inférieure 8 des éléments indésirables ciblés fondus.

Par exemple, si la vitesse de migration par gravité des particules ciblées est de 1m/s, et que la vitesse d'écoulement des gaz est de 10m/s, alors la distance 16 entre les deux surfaces de la veine 6 sera préférentiellement définie comme inférieure à un dixième (1m/s / 10 m/s) de la longueur de la veine qui est la distance entre l'entrée 9 et la sortie 10. Ainsi on est assuré que les particules qui migrent toucheront la surface inférieure 8 avant de sortir de la veine 6 par l'extrémité 10. Préférentiellement, ladite distance d est comprise entre 10 et 30mm.

Il n'y a pas de contrainte particulière sur la largeur de veine 15, c'est à dire la distance transversale, tant que les éléments utilisés pour matérialiser les surfaces 7 et 8 résistent aux sollicitations mécaniques, à la dilatation et aux autres contraintes qui s'appliquent.

A l'autre extrême, on peut disposer d'une largeur de veine 15 égale à la hauteur de veine 16, soit des veines 6 qui auraient une section carrée.

Selon une variante de l'invention, il est possible de disposer des veines 6 les unes au-dessus des autres de sorte que les particules captives 12, qui s'écoulent par gravité le long de la surface inférieure 8 d'une veine 6, arrivent à son extrémité basse 9 et tombent à travers la veine 6 placée juste en dessous. Donc, ces particules captives traversent le flux de gaz destinés à cheminer dans cette veine inférieure et ont la possibilité de capturer d'autres éléments indésirables. Puis ces particules captives 12 continuent leur chemin de migration gravitaire vers la surface inférieure interne 13.

Selon une variante de l'invention, il est possible d'appliquer un champ électrique entre les surfaces 7 et 8 de la veine 6 à l'aide d'un générateur de courant 20. Ce dispositif applique une force électromotrice aux particules ionisées, ce qui va favoriser leur migration vers la surface inférieure 8.

Une variante de l'invention consiste à régler la polarité du champ électrique de façon à provoquer une migration de particules vers la surface haute 7. Toutefois, cela serait moins efficace car une fois en contact avec la surface haute, les gouttes liquides doivent alors couler vers la surface inférieure interne 13 le long de cette surface et cela présente le risque que certaines particules captées 12 retombent par gravité dans la veine 6 et soient entraînées par les gaz.

Selon une autre variante de l'invention, il est possible d'appliquer un champ magnétique entre les surfaces 7 et 8 de la veine à l'aide d'un générateur de champ 21. Ce dispositif applique une force magnétique aux particules aimantées, ce qui va favoriser leur migration vers la surface inférieure 8.

Selon une variante de l'invention, l'enceinte 2 est calorifugée, car il faut que les parois de l'enceinte restent suffisamment chaudes pour qu'aucune particule 11 à séparer des gaz ne refroidisse en dessous de sa température de fusion, sous peine de générer un dépôt solide et un encrassement imposant l'arrêt de l'installation pour nettoyage.

Toutefois, si l'enceinte baigne totalement ou partiellement dans un environnement dont la température est proche de la température de fusion ciblée alors la contrainte de calorifugeage est moindre car les risques de refroidissement local disparaissent.

Selon l'invention, on réduit encore ce risque de solidification en intégrant dans les parois du dispositif 1 des éléments auxiliaires de chauffe, par exemple et de façon non limitée, au niveau des surfaces 8 avec un élément de chauffe 17 ou au niveau de la surface inférieure interne 13 avec un élément de chauffe 18 ou au niveau de la sortie 5 avec un élément de chauffe 19, qui garantissent la fusion des dépôts éventuels sur les parois.

Selon l'invention, ces éléments auxiliaires de chauffe sont de conception libre permettant d'augmenter la température comme décrit ci-dessus.

Par exemple, la chauffe peut être obtenue par des résistances électriques intégrées dans les parois du dispositif 1, ou par des circulations de fluide caloporteur tels des huiles ou des sels fondus portés à haute température, ces circulations étant intégrées de façon étanche dans les parois à réchauffer.

Il est aussi possible de faire circuler des gaz préchauffés dans lesdites parois. Il est aussi possible d'injecter localement du carburant et/ou du comburant dans le dispositif ce qui permet d'initier une combustion exothermique dans l'enveloppe 2 permettant aussi d'augmenter la température tel que souhaité.

Enfin, l'invention concerne aussi l'alimentation par intermittence du dispositif 1 avec des gaz surchauffés au-delà de la température de fusion des dépôts solides sur les parois, de façon à garantir une montée en température générale dans l'enceinte 2 et un nettoyage complet des parois éventuellement encrassées.

Ces dispositifs auxiliaires de chauffe peuvent être actionnés de façon locale permanente pour sécuriser en continu la propreté des parois dans les zones sujettes au dépôt de particules, ou par intermittence selon un programme de nettoyage à fréquence fixe ou à fréquence variable régulée par la détection de l'encrassement des parois.

Selon l'invention, toute solution de détection d'encrassement des parois convient. Par exemple il est possible de mesurer l'écart de température entre les gaz qui entrent dans le dispositif 1, les gaz qui en sortent et les parois encrassées (température de surface ou en profondeur dans la paroi, en fonction de la position du capteur de température par contact utilisé). Si cet écart dépasse une certaine valeur prédéfinie alors il est possible de conclure qu'un phénomène d'encrassement est en cours, car cet encrassement joue un rôle d'isolant thermique qui empêche les gaz chauds de chauffer la paroi considérée.

Selon une variante de l'invention, il est possible de détecter l'encrassement du dispositif 1 par la mesure comparée entre la turbidité des gaz qui entrent et ceux qui sortent du dispositif 1 de sorte que toute variation significative des mesures peut signifier une perte d'efficacité du dispositif d'épuration et donc son encrassement.

Selon une autre variante de l'invention, il est possible de procéder au pesage de l'ensemble du dispositif d'épuration afin de détecter une variation de masse, induisant la conclusion de la présence d'une accumulation anormale d'éléments indésirables sur les parois dudit dispositif.

L'invention concerne également un procédé d'épuration de gaz utilisant les dispositifs ou les configurations décrits ci-dessus.

## Revendications

1. Dispositif d'épuration (1) de gaz issus de la gazéification ou de la combustion de matière organique, comprenant une enceinte (2), communiquant avec une première ouverture dite d'alimentation en gaz chauds contaminés (3), communiquant avec une deuxième ouverture dite d'évacuation des gaz épurés (4) et communiquant avec une troisième ouverture, ouverte au point bas de ladite enceinte (2), dite sortie basse (5) des éléments indésirables, ladite enceinte (2) contenant au moins une veine (6), destinée à canaliser lesdits gaz chauds, encadrée par au moins deux surfaces sensiblement parallèles (7, 8) et écartées d'une distance d comprise entre 1 mm et 1000 mm, ladite veine (6) présente une extrémité d'entrée des gaz (9) connectée à l'alimentation en gaz contaminés (3) et une extrémité de sortie des gaz (10) connectée à l'évacuation des gaz épurés(4) et ladite veine (6) présentant une inclinaison par rapport à l'horizontale comprise entre 1° et 89° et la surface interne inférieure (13) de ladite enceinte (2) convergeant vers la sortie basse (5) et comprenant en outre un moyen de régulation de la température de ladite enceinte (2) apte à réguler la température à l'intérieur de ladite enceinte (2) au-delà de 100°C et préférentiellement au-delà de 400°C **caractérisé en ce que** ledit moyen de régulation de la température est situé dans les parois dudit dispositif (1) et comprend des éléments auxiliaires de chauffe permettant d'augmenter ladite température.

2. Dispositif selon la revendication précédente, **caractérisé en ce que** ladite inclinaison est comprise entre 30° et 60°.

3. Dispositif selon l'une quelconque des revendications précédentes, **caractérisé en ce que** la veine (6) est encadrée par au moins deux plaques planes (7, 8) sensiblement parallèles.

4. Dispositif selon l'une quelconque des revendications précédentes, **caractérisé en ce que** les surfaces (7, 8) encadrant ladite veine (6) présentent des ondulations dans le sens transversal.

5. Dispositif selon l'une quelconque des revendications précédentes, **caractérisé en ce que** la distance (16) entre les deux surfaces (7, 8) encadrant la veine (6) est comprise entre 10 et 30 mm.

6. Dispositif selon l'une quelconque des revendications précédentes, **caractérisé en ce qu'**il comprend en outre un générateur de champ électrique (20) disposé de telle sorte à générer un champ électrique à l'intérieur de ladite veine (6).

7. Dispositif selon l'une quelconque des revendications précédentes, **caractérisé en ce qu'**il comprend en outre un générateur de champ magnétique (21) disposé de telle sorte à générer un champ magnétique à l'intérieur de ladite veine.

8. Dispositif selon l'une quelconque des revendications précédentes, **caractérisé en ce que** ledit élément auxiliaire de chauffe est un moyen (17) apte à chauffer au moins une des surfaces (7, 8) encadrant ladite veine (6).

9. Dispositif selon l'une quelconque des revendications précédentes, **caractérisé** en ce ledit élément auxiliaire de chauffe est un dispositif de chauffe (18) apte à chauffer la surface interne inférieure (13) de ladite enceinte.

10. Dispositif selon la revendication précédente, **caractérisé en ce que** ledit élément auxiliaire de chauffe est un dispositif de chauffe (19) apte à chauffer ladite sortie basse (5) des éléments indésirables.

11. Dispositif selon l'une quelconque des revendications précédentes, **caractérisé en ce que** ledit dispositif d'épuration (1) comprend plusieurs veines (6).

12. Dispositif selon la revendication précédente, **caractérisé en ce que** lesdites veines (6) sont superposées.

13. Procédé d'épuration de gaz issus de la gazéification ou de la combustion de matière première organique, mettant en œuvre un dispositif selon l'une des revendications précédentes.

14. Procédé d'épuration de gaz issus de la gazéification ou de la combustion de matière première organique selon la revendication précédente; **caractérisé en ce que** les gaz chauds contaminés à traiter ont une température à l'introduction dans l'enceinte (2) supérieure ou égale à la température de fusion des éléments indésirables qui doivent être capturés.

## Patentansprüche

1. Vorrichtung (1) zur Klärung von Gasen, die aus der Vergasung oder der Verbrennung von organischem Material stammen, umfassend einen Innenraum (2), der mit einer ersten Öffnung, bezeichnet als Öffnung zur Versorgung mit verunreinigten heißen Gasen (3), kommuniziert, die mit einer zweiten Öffnung, bezeichnet als Öffnung zur Ableitung von geklärten Gasen (4), kommuniziert, und die mit einer dritten Öffnung kommuniziert, die auf dem unteren Punkt des Innenraums (2), bezeichnet als unterer Ausgang (5) der nicht erwünschten Elemente, offen ist, wobei der Innenraum (2) mindestens eine Leitung (6) umfasst, die ausgelegt ist, um die heißen Gase zu kanalisieren, die durch mindestens zwei im Wesentlichen parallele Flächen (7, 8), die um eine Distanz d , die zwischen 1 mm und 1000 mm liegt, beabstandet sind, umrahmt ist, wobei die Leitung (6) ein Ende zum Eintritt der Gase (9), das mit der Versorgung von verunreinigten Gasen (3) verbunden ist, und ein Ende zum Ausgang der Gase (10) aufweist, das mit der Ableitung der geklärten Gase (4) verbunden ist, und die Leitung (6) eine Neigung mit Bezug auf die Horizontale aufweist, die zwischen 1° und 89° liegt und die untere Innenfläche (13) des Innenraums (2) hin zum unteren Ausgang (5) zusammenläuft und außerdem ein Mittel zur Regulierung der Temperatur des Innenraums (2) umfasst, das ausgelegt ist, um die Temperatur im Inneren des Innenraums (2) über 100 °C hinaus und vorzugsweise über 400 °C hinaus zu regulieren, **dadurch gekennzeichnet, dass** sich das Mittel zur Regulierung der Temperatur in den Wänden der Vorrichtung (1) befindet und Hilfselemente zum Heizen umfasst, die ermöglichen, die Temperatur zu erhöhen.

2. Vorrichtung nach dem vorhergehenden Anspruch, **dadurch gekennzeichnet, dass** die Neigung zwischen 30° und 60° liegt.

3. Vorrichtung nach einem der vorhergehenden Ansprüche, **dadurch gekennzeichnet, dass** die Leitung (6) durch mindestens zwei ebene Platten (7, 8), die im Wesentlichen parallel sind, umrahmt ist.

4. Vorrichtung nach einem der vorhergehenden Ansprüche, **dadurch gekennzeichnet, dass** die Flächen (7, 8), die die Leitung (6) umrahmen, Wellungen in der Querrichtung aufweisen.

5. Vorrichtung nach einem der vorhergehenden Ansprüche, **dadurch gekennzeichnet, dass** die Distanz (16) zwischen den zwei Flächen (7, 8), die die Leitung (6) einrahmen, zwischen 10 und 30 mm liegt.

6. Vorrichtung nach einem der vorhergehenden Ansprüche, **dadurch gekennzeichnet, dass** sie einen Elektrofeldgenerator (20) umfasst, der derart angeordnet ist, dass er ein elektrisches Feld im Inneren der Leitung (6) erzeugt.

7. Vorrichtung nach einem der vorhergehenden Ansprüche, **dadurch gekennzeichnet, dass** sie außerdem einen Magnetfeldgenerator (21) umfasst, der derart angeordnet ist, dass er ein magnetisches Feld im inneren der Leitung erzeugt.

8. Vorrichtung nach einem der vorhergehenden Ansprüche, **dadurch gekennzeichnet, dass** das Hilfsmittel zum Heizen ein Mittel (17) ist, das ausgelegt ist, um mindestens eine der Flächen (7, 8), die die Leitung (6) umrahmen, zu heizen.

9. Vorrichtung nach einem der vorhergehenden Ansprüche, **dadurch gekennzeichnet, dass** das Hilfsmittel zum Heizen eine Vorrichtung (18) zum Heizen ist, die ausgelegt ist, um die untere Innenfläche (13) des Innenraums zu heizen.

10. Vorrichtung nach dem vorhergehenden Anspruch, **dadurch gekennzeichnet, dass** das Hilfsmittel zum Heizen eine Vorrichtung zum Heizen (19) ist, die ausgelegt ist, um den unteren Ausgang (5) der nicht erwünschten Elemente zu heizen.

11. Vorrichtung nach einem der vorhergehenden Ansprüche, **dadurch gekennzeichnet, dass** die Vorrichtung zur Klärung (1) mehrere Leitungen (6) umfasst.

12. Vorrichtung nach dem vorhergehenden Anspruch, **dadurch gekennzeichnet, dass** die Leitungen (6) übereinandergelegt sind.

13. Verfahren zur Klärung von Gasen, die aus der Vergasung oder der Verbrennung von organischem Rohstoff stammen, die eine Vorrichtung nach einem der vorhergehenden Ansprüche durchführt.

14. Verfahren zur Klärung von Gasen, die aus der Vergasung oder der Verbrennung von organischem Rohstoff stammen, nach dem vorhergehenden Anspruch, **dadurch gekennzeichnet, dass** die zu behandelnden verunreinigten heißen Gase eine Temperatur bei der Einführung in den Innenraum (2) aufweisen, die höher als die oder gleich der Fusionstemperatur der nicht erwünschten Elemente ist, die eingefangen werden müssen.

## Claims

1. Device for purifying (1) gases from organic matter gasification or combustion, comprising a chamber (2), in communication with a first so-called contaminated hot gas supply opening (3), in communication with a second so-called purified gas exhaust opening (4) and in communication with a third opening, open at the bottom point of said chamber (2), so-called waste element bottom outlet (5), said chamber (2) containing at least one vein (6), intended for channelling said hot gases, flanked by at least two substantially parallel surfaces (7, 8) and separated from each other by a distance d of between 1 mm and 1000 mm, said vein (6) has a gas input end (9) connected to the contaminated gas supply opening (3) and a gas outlet end (10) connected to the purified gas exhaust opening (4) and said vein (6) having a slope, of between 1° and 89° relative to the horizontal and the bottom inner surface (13) of said chamber (2) converging towards the bottom outlet (5) and further comprising a means for adjusting the temperature of said chamber (2) capable of adjusting the temperature inside said chamber (2) beyond 100°C and preferably beyond 400°C **characterised in that** said means for adjusting the temperature is located in the walls of said device (1) and comprises auxiliary heating devices that make it possible to increase said temperature.

2. Device according to the preceding claim, **characterised in that** said slope is between 30° and 60°.

3. Device according to any preceding claim, **characterised in that** the vein (6) is flanked by at least two substantially parallel planar plates (7, 8).

4. Device according to any preceding claim, **characterised in that** the surfaces (7, 8) that flank said vein (6) have undulations in the transverse direction.

5. Device according to any preceding claim, **characterised in that** the distance (16) between the two surfaces (7, 8) that flank the vein (6) is between 10 and 30 mm.

6. Device according to any preceding claim, **characterised in that** it further comprises an electric field generator (20) arranged in such a way as to generate an electric field inside said vein (6).

7. Device according to any preceding claim, **characterised in that** it further comprises a magnetic field generator (21) arranged in such a way as to generate a magnetic field inside said vein.

8. Device according to any preceding claim, **characterised in that** said auxiliary heating element is a means (17) that can heat at least one of the surfaces (7, 8) that flank said vein (6).

9. Device according to any preceding claim, **characterised in that** said auxiliary heating element is a heating device (18) that can heat the bottom inner surface (13) of said chamber.

10. Device according to the preceding claim, **characterised in that** said auxiliary heating element is a heating device (19) that can heat said waste element bottom outlet (5).

11. Device according to any preceding claim, **characterised in that** said device for purifying (1) comprises several veins (6).

12. Device according to the preceding claim, **characterised in that** said veins (6) are superimposed.

13. Method for purifying gases from organic matter gasification or combustion, implementing a device according to one of the preceding claims.

14. Method for purifying gases from organic matter gasification or combustion according to the preceding claim, **characterised in that** the hot contaminated gases to be treated have a temperature when introduced into the chamber (2) greater than or equal to the melting temperature of the waste elements that have to be captured.
